# FASCICULE DE BREVET EUROPEEN

(11) **EP 1 086 304 B1**
(45) Date de publication et mention de la délivrance du brevet: **25.02.2004**
(21) Numéro de dépôt: 00917129.9
(22) Date de dépôt: 05.04.2000
(51) Int. Cl.: F02D 41/02, F02D 41/40, F01N 3/02, F01N 3/023

(54) **SYSTEME DE REGENERATION POUR UN FILTRE A PARTICULES DE GAZ D'ECHAPPEMENT DE MOTEUR DIESEL**
REGENERIERUNGSSYSTEM FÜR EINEN DIESELMOTORABGASPARTIKELFILTER
REGENERATION SYSTEM FOR A DIESEL ENGINE EXHAUST GAS PARTICULATE FILTER

(30) Priorité: 06.04.1999 FR 9904274
(43) Date de publication de la demande: 28.03.2001
(73) Titulaire: Peugeot Citroen Automobiles SA, 92200 Neuilly sur Seine (FR)
(72) Inventeur: SALVAT, Olivier, F-75014 Paris (FR); PORTALIER, Jacques, F-92100 Boulogne (FR); LE TALLEC, Partrice, F-78500 Sartrouville (FR)
(74) Mandataire: Habasque, Etienne Joel Jean-François
(86) Numéro de dépôt international: PCT/FR2000/000859
(87) Numéro de publication internationale: WO 2000/060228

(56) Documents cités:
- US-A- 4 685 290
- US-A- 4 719 751
- US-A- 5 826 425
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)

## Description

La présente invention concerne un système d'aide à la régénération d'un filtre à particules intégré dans une ligne d'échappement d'un moteur notamment de véhicule automobile.

On sait que l'une des préoccupations les plus importantes des équipementiers et des constructeurs de véhicules automobiles, est la réduction de la pollution engendrée par le fonctionnement des moteurs de ceux-ci.

Ceci est en particulier le cas pour les moteurs Diesel.

Différentes solutions ont donc été envisagées pour tenter de réduire le niveau de pollution de ces moteurs.

C'est ainsi par exemple que l'on a déjà proposé dans l'état de la technique, d'intégrer dans les lignes d'échappement de ces moteurs Diesel, des filtres à particules.

Ceux-ci sont alors adaptés pour piéger les particules ou suies contenues dans les gaz d'échappement de ces moteurs et les brûler lors d'une phase de régénération du filtre.

Différents moyens d'aide à la régénération de ces filtres ont déjà été développés dans l'état de la technique.

On sait en effet que la température naturelle de régénération des suies se situe aux alentours de 550 à 600°C.

Or, ces températures ne peuvent être atteintes que pour des conditions de fonctionnement à très forte charge de ces moteurs.

Pour faciliter la régénération à faible charge, ces filtres à particules peuvent être associés à des catalyseurs d'oxydation disposés en amont de ceux-ci.

On a également développé dans l'état de la technique, d'autres systèmes d'aide à la régénération de ces filtres, qui comprennent des moyens d'injection de carburant dans les cylindres du moteur pendant la phase de détente de ceux-ci, pour provoquer une augmentation de la température des gaz d'échappement afin d'aider à la régénération du filtre.

Le développement de ces systèmes est lié à l'apparition des systèmes d'alimentation commune des cylindres des moteurs, également appelés "Common Rail".

Cependant, ces systèmes présentent un certain nombre d'inconvénients, notamment au niveau des répercussions de cette post-injection sur le couple moteur fourni.

En effet, une telle post-injection se traduit par des fluctuations relativement importantes du couple moteur, diminuant d'autant l'agrément de conduite du véhicule.

Le but de l'invention est donc de résoudre ces problèmes.

A cet effet, l'invention a pour objet un système d'aide à la régénération d'un filtre à particules intégré dans une ligne d'échappement notamment de véhicule automobile, du type comportant des moyens d'injection de carburant dans au moins certains des cylindres du moteur pendant la phase de détente de ceux-ci, pour provoquer une augmentation de la température des gaz d'échappement de ceux-ci afin d'aider à la régénération du filtre, caractérisé en ce que les moyens d'injection sont adaptés pour provoquer plusieurs injections de carburant, en quantités calibrées, réparties dans le temps pendant la phase de détente, en ce que le moteur est associé à un turbocompresseur et en ce que le système comporte des moyens de régulation de la pression de suralimentation du turbocompresseur pour réduire la quantité d'air entrant dans le moteur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide à la régénération d'un filtre selon l'invention; et
- les Figs. 2, 3 et 4 illustrent le fonctionnement d'un tel système.

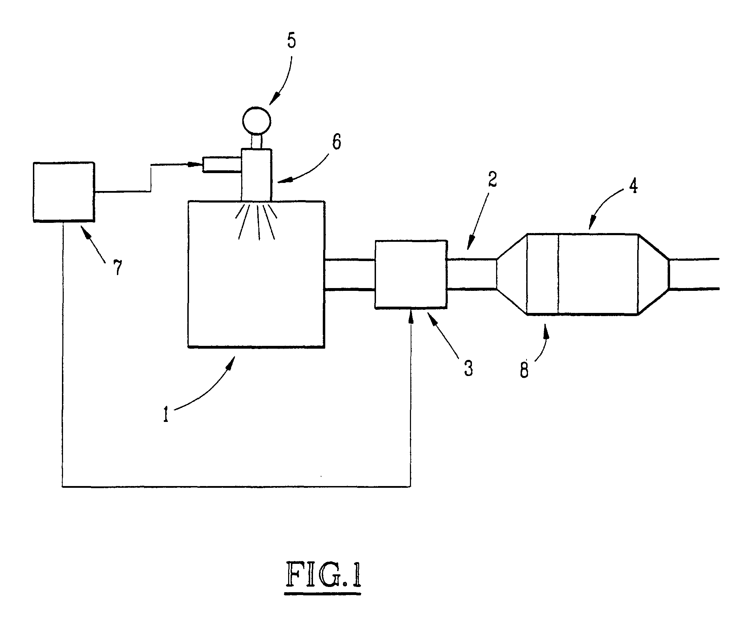

On reconnaît en effet sur la figure 1, un système d'aide à la régénération d'un filtre à particules intégré dans une ligne d'échappement d'un moteur Diesel, notamment de véhicule automobile.

Sur cette figure, le moteur est désigné par la référence générale 1 et les gaz d'échappement de celui-ci sont amenés à circuler dans une ligne d'échappement désignée par la référence générale 2.

Cette ligne d'échappement est éventuellement associée à un turbocompresseur désigné par la référence générale 3 et les gaz passent donc dans ce turbocompresseur et plus particulièrement dans la portion de turbine de celui-ci.

Ensuite, les gaz sont amenés à circuler dans un filtre à particules, désigné par la référence générale 4 sur cette figure 1.

Le moteur est également associé à un système d'alimentation en carburant désigné par la référence générale 5 sur cette figure, ce système d'alimentation comportant par exemple un système d'alimentation commune de tous les cylindres du moteur, de type "Common Rail", comportant pour chaque cylindre du moteur, un injecteur à commande par exemple électrique, tel que celui désigné par la référence générale 6 sur cette figure.

Le pilotage de ces injecteurs est assuré par l'intermédiaire d'une unité centrale de traitement d'informations, désignée par la référence générale 7.

Le filtre à particules désigné par la référence générale 4 peut également être associé à un catalyseur d'oxydation désigné par la référence générale 8 sur cette figure, d'aide à sa régénération et disposé en amont de ce filtre dans la ligne d'échappement.

Selon l'invention, les moyens d'injection de carburant sont adaptés pour provoquer plusieurs injections de carburant en quantités calibrées, réparties dans le temps pendant la phase de détente d'au moins certains des cylindres.

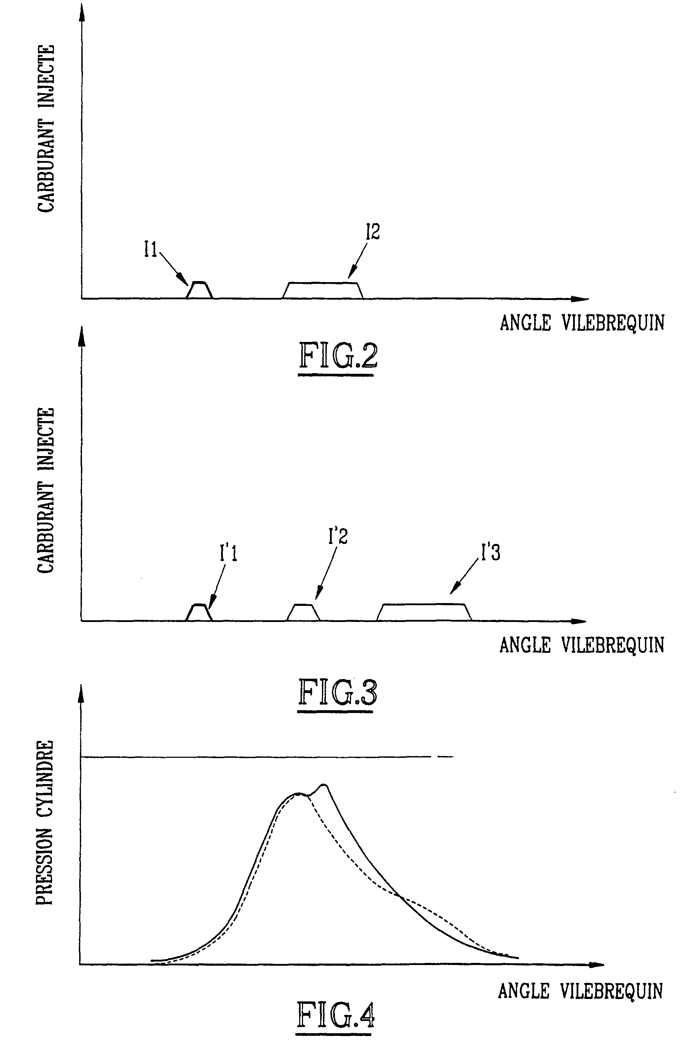

Ceci permet alors d'augmenter la température des gaz d'échappement pour aider à la régénération du filtre et ce, sans répercussion notable sur le couple fourni par le moteur comme cela est illustré sur les figures 2, 3 et 4.

En effet, on peut constater sur la figure 2, que, pendant une phase de fonctionnement du moteur sans aide à la régénération, le carburant est injecté en deux étapes, à savoir une injection dite pilote l1 qui prépare l'injection principale l2 qui suit.

Lors d'une phase de fonctionnement avec aide à la régénération du filtre, l'objectif est de prolonger la combustion le plus longtemps possible, sans modifier le couple moteur, pour obtenir des températures plus élevées des gaz dans la chambre de combustion au moment de l'ouverture de la soupape d'échappement afin d'augmenter la température des suies et déclencher leur combustion dans le filtre à particules.

Pour cela, et comme cela est illustré sur la figure 3, le carburant peut être injecté en quantités calibrées dans au moins certains des cylindres, par exemple en trois étapes, à savoir, une première injection dite pilote l'1 identique à l1, une deuxième injection l'2 qui engendre les conditions thermodynamiques favorables à une troisième injection l'3 et assure une partie du couple demandé par l'utilisateur.

La quantité de carburant injectée lors de l'injection l'2 est inférieure ou très inférieure à celle injectée lors de l'injection l2, le phasage de l'2 étant identique ou retardé par rapport à celui de l2.

L'injection l'3 engendre le complément de couple permettant d'atteindre celui demandé par le conducteur du véhicule, augmente la température des gaz d'échappement en poursuivant la combustion tardivement pendant la phase de détente et peut également engendrer, suivant son réglage, des hydrocarbures imbrûlés qui assureront une augmentation complémentaire de la température des gaz, grâce à une combustion catalytique dans le catalyseur 8 placé en amont du filtre à particules.

Pour engendrer le niveau thermique souhaité sans modifier le couple moteur (Fig.4), la quantité de carburant injectée lors de l'injection l'3 est donc très supérieure à celle injectée lors de l'injection l'2 pour les points de fonctionnement à faible charge du moteur, supérieure ou égale à celle-ci pour les charges intermédiaires et inférieure à celle-ci pour les points de fonctionnement à forte charge du moteur, l'injection l'3 ayant lieu après l'injection l'2 avec un décalage angulaire pouvant aller de 15 à 150° vilebrequin suivant le point de fonctionnement.

On notera que dans cet exemple de réalisation, deux injections sont réalisées successivement dans le temps en post-injection pendant la phase de détente.

Il va de soi bien entendu qu'un nombre supérieur d'injections peut être envisagé et que par exemple l'injection l'3 peut être elle-même décomposée en deux sous-injections ayant pour fonction d'engendrer le couple complémentaire du moteur, l'augmentation de température des gaz et les hydrocarbures qui seront brûlés par le catalyseur 8, cette solution permettant un meilleur contrôle du fonctionnement qu'avec une seule injection l'3.

Cependant, pour ne pas modifier le couple moteur, en complément de cette injection multiple, il est également nécessaire lorsque le moteur est associé à un turbocompresseur comme cela est illustré, d'appliquer à celui-ci, une consigne de pression de suralimentation spécifique, pour compenser l'augmentation d'énergie que reçoit le turbocompresseur à la suite de l'accroissement des niveaux thermiques à échappement.

Cette nouvelle consigne diminue alors le débit d'air entrant dans le moteur, ce qui a pour effet d'augmenter la richesse des gaz d'échappement et en accroît également la température.

Dans ce cas, cette consigne peut par exemple être délivrée par l'unité centrale de traitement d'informations 7 au turbocompresseur désigné par la référence générale 3 sur la figure 1.

On conçoit alors que le système d'aide la régénération selon l'invention permet de créer les niveaux thermiques nécessaires à la combustion des suies dans le filtre sans modification du couple moteur.

Ces niveaux thermiques sont atteints à iso-couple par un prolongement de la combustion dans le cycle moteur grâce à des injections multiples successives de carburant lors de la phase de détente d'au moins certains cylindres de celui-ci, ces injections pouvant être associées à une combustion catalytique d'hydrocarbures engendrés par ces injections multiples dans un catalyseur et par une consigne spécifique de régulation de la pression de suralimentation d'un turbocompresseur associé au moteur.

Ceci permet alors d'obtenir une régénération du filtre à particules sans dégradation de l'agrément de conduite du véhicule, c'est-à-dire sans accélération ou ralentissement soudain de celui-ci, dans le cas d'une utilisation à faible charge ou à charge intermédiaire, où les niveaux thermiques atteints naturellement par le moteur, ne permettent pas la combustion des suies.

Il va de soi bien entendu que différents modes de réalisation d'un tel système peuvent être envisagés.

## Revendications

1. Système d'aide à la régénération d'un filtre à particules (4) intégré dans une ligne d'échappement (2) d'un moteur notamment de véhicule automobile, du type comportant des moyens (5) d'injection de carburant dans au moins certains des cylindres du moteur (1) pendant la phase de détente de ceux-ci, pour provoquer une augmentation de la température des gaz d'échappement de ceux-ci afin d'aider à la régénération du filtre, **caractérisé en ce que** les moyens d'injection (5) sont adaptés pour provoquer plusieurs injections de carburant (l'2, l'3), en quantités calibrées, réparties dans le temps pendant la phase de détente, **en ce que** le moteur est associé à un turbocompresseur (3) et **en ce que** le système comporte des moyens (7) de régulation de la pression de suralimentation du turbocompresseur pour réduire la quantité d'air entrant dans le moteur.

2. Système selon la revendication 1, **caractérisé en ce qu'**un catalyseur d'oxydation (8) est disposé en amont du filtre à particules.

3. Système selon l'une quelconque des revendications précédentes, **caractérisé en ce que** le moteur (1) est associé à des moyens (5,6) d'alimentation commune en carburant de tous les cylindres de celui-ci.

## Patentansprüche

1. System zur Unterstützung der Regeneration eines Partikelfilters (4), das in eine Abgasstrecke (2) eines Motors insbesondere eines Kraftfahrzeugs integriert ist, umfassend Mittel (5) zur Einspritzung von Kraftstoff in mindestens manche der Zylinder des Motors (1) während deren Entspannungsphase, um zur Unterstützung der Regeneration des Filters eine Erhöhung der Temperatur ihrer Abgase zu bewirken, **dadurch gekennzeichnet, daß** die Einspritzmittel (5) dafür ausgelegt sind, mehrere Kraftstoffeinspritzungen (I'2, I'3) in kalibrierten Mengen zu bewirken, die während der Entspannungsphase zeitlich verteilt sind, daß dem Motor ein Turbolader (3) zugeordnet ist und daß das System Mittel (7) zur Regulierung des Ladedrucks des Turboladers zur Verringerung der Menge der in den Motor eintretenden Luft aufweist.

2. System nach Anspruch 1, **dadurch gekennzeichnet, daß** stromauf des Partikelfilters ein Oxidationskatalysator (8) angeordnet ist.

3. System nach einem der vorhergehenden Ansprüche, **dadurch gekennzeichnet, daß** dem Motor (1) Mittel (5, 6) zur gemeinsamen Kraftstoffversorgung aller seiner Zylinder zugeordnet sind.

## Claims

1. System for assisting with the regeneration of a particulates filter (4) incorporated into an exhaust line (2) of an engine, particularly of a motor vehicle, of the type comprising means (5) of injecting fuel into at least some of the cylinders of the engine (1) while these are on their expansion stroke, in order to raise the temperature of the exhaust gases therein so as to assist with regenerating the filter, **characterized in that** the injection means (5) are designed to inject a number of shots (I'2, I'3) of fuel, in metered amounts distributed over time during the expansion stroke, **in that** the engine is associated with a turbocompressor (3) and **in that** the system comprises means (7) for regulating the boost pressure of the turbocompressor so as to reduce the amount of air entering the engine.

2. System according to Claim 1, **characterized in that** an oxidation catalytic converter (8) is arranged upstream of the particulates filter.

3. System according to either of the preceding claims, **characterized in that** the engine (1) is associated with means (5, 6) for the common supply of fuel to all the cylinders thereof.
